(19) Europäisches Patentamt
European Patent Office
Office européen des brevets

(11) **EP 4 560 916 A1**

(12) **EUROPEAN PATENT APPLICATION**

(43) Date of publication:
**28.05.2025 Bulletin 2025/22**

(21) Application number: **23211740.8**

(22) Date of filing: **23.11.2023**

(51) International Patent Classification (IPC):
***H02P 23/14*** (2006.01)    ***H02P 23/00*** (2016.01)

(52) Cooperative Patent Classification (CPC):
**H02P 23/14;** H02P 23/009; H02P 2207/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Polestar Performance AB
405 31 Gothenburg (SE)**

(72) Inventor: **HU, Yifei
417 62 Göteborg (SE)**

(74) Representative: **Zacco Sweden AB
P.O. Box 5581
Löjtnantsgatan 21
114 85 Stockholm (SE)**

(54) **A METHOD FOR DETERMINING A TARGET FLUX VALUE FOR FIELD WEAKENING CONTROL**

(57)     The present invention relates to a method (100) for determining a target flux value for subsequent field weakening control of a permanent magnet synchronous motor. The method (100) comprising: inputting (S102) an actual voltage, a reference voltage, and an actual speed of the motor to a controller comprising a proportional term having a proportional gain factor, and an integral term having an integral gain factor; setting (S104) the proportional gain factor based on the actual voltage and the reference voltage; and determining (S108) the target flux value based on an output from the controller. The present invention further relates to a device thereof.

100

```
┌─────────────────────────────────────────────────────────────┐
│                            S102                              │
│ Inputting an actual voltage, a reference voltage, and an     │
│ actual speed to a PI controller                             │
└─────────────────────────────────────────────────────────────┘
                              │
                              ▼
┌─────────────────────────────────────────────────────────────┐
│                            S104                              │
│ Setting a proportional gain factor of the PI-controller      │
│ based on the actual voltage and the reference voltage       │
└─────────────────────────────────────────────────────────────┘
                              │
                              ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─┐
│                            S106                              │
  Setting an integral gain factor of the PI-controller to a
│ fourth defined value                                        │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─┘
                              │
                              ▼
┌─────────────────────────────────────────────────────────────┐
│                            S108                              │
│ Determining a target flux based on an output of the          │
│ PI-controller                                               │
└─────────────────────────────────────────────────────────────┘
```

EP 4 560 916 A1

Fig. 1

**Description**

TECHNICAL FIELD

The disclosed technology relates to the field of electric motor control, and in particular to a method, device and computer program product for determining a target flux value for subsequent field weakening control of a permanent magnet synchronous motor.

BACKGROUND

Electric motors are fundamental components in a wide range of applications, from industrial machinery to electric vehicles and household appliances. To optimize their performance and efficiency, various control techniques have been developed over the years. Field-oriented control (FOC) is one such method that has gained significant attention within the field of electric motor control.

Field-oriented control is a technique used for e.g. Permanent Magnet Synchronous Motor (PMSM), that aims to decouple the control of the magnetic field and torque in electric motors. By aligning the rotor magnetic field with the stator magnetic field, FOC can ensure that the motor operates at optimal efficiency across a wide range of operating conditions. This level of control allows for smooth and precise regulation of motor speed and torque, making it an ideal choice for many applications where accuracy and efficiency are paramount, such as in electric vehicles.

These motors often need to operate over a wide range of speeds and load conditions, and controlling their performance under these dynamic conditions is of paramount importance. One key component of electric motor control in such situations is the technique known as "field weakening."

Field weakening is a strategy used to expand the operational range of electric motors, particularly in applications where high torque at high speeds or efficient operation over a broad speed range is required. Conventional electric motors, when operated at high speeds, may encounter physical limitations resulting in reduced torque and increased power losses.

Field weakening involves adjusting the stator magnetic field, effectively "weakening" the field, in order to allow the motor to operate at higher speeds with reduced current. This technique is commonly used in electric vehicles, industrial machinery, and other applications where high-speed operation is essential. By employing field weakening, the motor can continue to provide adequate torque and performance even as it operates beyond its nominal design speed.

However, there are drawbacks and limitations to today's techniques for implementing field weakening control. There is therefore need for improvements with respect to this, which unlocks even better performance in high speed applications.

SUMMARY

The herein disclosed technology seeks to mitigate, alleviate or eliminate one or more of the above-identified deficiencies and disadvantages in the prior art to address various problems relating to field weakening in field oriented control of permanent magnet synchronous motors.

More specifically, the inventors have realized a new and improved way of determining target flux value for field weakening control which can result in improved stability and harmonic minimization of the motor. Moreover, the motor can get improved performance. If deployed in a battery-powered electric vehicle, the presently disclosed technology may provide for longer mileage due to lower energy losses. The presently disclosed technology is at least partly based on the realization that employing adjustable parameters of a PI controller configured to determine the target flux value can improve the motor control in these regards.

Various aspects and embodiments of the disclosed technology are defined below and in the accompanying independent and dependent claims.

According to a first aspect, there is provided a method for determining a target flux value for subsequent field weakening control of a permanent magnet synchronous motor. The method comprises inputting an actual voltage, a reference voltage, and an actual speed of the motor to a controller comprising a proportional term having a proportional gain factor, and an integral term having an integral gain factor. The method further comprises setting the proportional gain factor based on the actual voltage and the reference voltage. The method further comprises determining the target flux value based on an output from the controller.

The proportional gain factor may be set based on a voltage utilization level. Thereby, the proportional gain factor can be set to help increasing the voltage utilization level, while maintaining stability of the controller and achieving an improved field weakening solution.

The proportional gain factor may be set to a first defined value different from a default value of the proportional gain factor, in response to detecting the actual voltage exceeding a threshold value based on the reference voltage.

The first defined value may be lower than the default value. Reducing the proportional gain factor may be advantageous in that can reduce harmonics in the controller, and at the same time not slow down the dynamics.

The first defined value may be set based on a comparison between the actual voltage and the reference voltage.

The first defined value may be set according to a linear interpolation between a first and a second end value. This may be advantageous in that it can provide for a smoother transition when changing proportional gains since the voltage is typically changing constantly.

In response to detecting the actual voltage being equal to, or above, the reference voltage, the proportional gain factor may be set to the second end value.

In response to detecting the actual voltage being below the threshold value, the proportional gain factor may be set to the default value of the proportional gain factor.

In response to detecting the actual speed being within a first defined range above a base speed threshold and the actual voltage not exceeding the threshold value based on the reference voltage, the proportional gain factor may be set to a second defined value being lower than the default value. This may be advantageous in that the controller at high speed may not be so aggressive. Thus, this may ease the control and reduce harmonics.

In response to detecting the actual speed being within a first defined range above a base speed threshold and the actual voltage exceeding the threshold value based on the reference voltage, the proportional gain factor may be set to a third defined value being lower than the first defined value. By combining the two cases, i.e. setting the proportional gain factor based on the actual voltage and the actual speed, the controller can achieve better stability and reduce harmonics under extreme conditions.

In response to detecting the actual speed being within a second defined range above a base speed threshold, the method may further comprise setting the integral gain factor to a fourth defined value different from a default value of the integral gain factor. This may allow better dynamics and faster control of the controller.

In response to detecting the actual speed being within a third defined range above the second defined range, the integral gain factor may be set to the default value of the integral gain factor. This may be advantageous in that is eases the controller at high speed, which can achieve easier control and reduce harmonics.

The fourth defined value may be higher than the default value of the integral gain factor.

The fourth defined value may be set based on a comparison between the actual speed and the base speed.

The defined value may be set according to a linear interpolation between a third and a fourth end value.

According to a second aspect, there is provided a computer program product comprising instructions which, when the program is executed by a computing device, causes the computing device to carry out the method according to the first aspect. The above-mentioned features and advantages of the previous aspects, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. The above-mentioned features and advantages of the previous aspects, when applicable, apply to this third aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect, there is provided a control device for determining a target flux value for subsequent field weakening control of a permanent magnet synchronous motor, the control device comprising control circuitry configured to perform the method according to the first aspect.

The above-mentioned features and advantages of the previous aspects, when applicable, apply to this fourth aspect as well. In order to avoid undue repetition, reference is made to the above.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. These and other features and advantages of the disclosed technology will in the following be further clarified with reference to the embodiments and variants described hereinafter.

BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:

Figure 1 is a schematic flowchart representation of a method for determining a target flux value for subsequent field weakening control of a permanent magnet synchronous motor according to some embodiments.
Figure 2 is a schematic illustration of a device for determining a target flux value for subsequent field weakening control of a permanent magnet synchronous motor according to some embodiments.
Figure 3 is a schematic flowchart representation of how a proportional gain factor is set according to some embodiments.
Figure 4 is a schematic flowchart representation of how an integral gain factor is set according to some embodiments.
Figure 5 illustrated, by way of example, a motor control scheme of a permanent magnet synchronous motor.

DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first defined value could be termed a second defined value, and, similarly, a second defined value could be termed a first defined value, without departing from the scope of the embodiments. The first element and the second element are both defined values, but they are not the same defined value, unless stated otherwise.

As described above, the presently disclosed technology relates to field oriented control (FOC) of permanent magnet synchronous motors (PMSM), and more specifically to field weakening control thereof. PMSM are today used in many applications because of its high power density, high speed, and fast dynamic response. However, PMSM speed is limited when the stator terminal voltage reaches a limit of the inverter output. This limit is herein referred to as a stator voltage limit ($U\_lim$), or maximum available voltage. The stator voltage limit is dependent on a voltage rating of a power source of the motor, such as a battery voltage ($U\_bat$) or a DC link voltage. The stator voltage limit may be further dependent on a modulation index (m) and inverter non-linearity characteristics ($A$) (for example dead time, minimum pulse width, etc.) of the motor. As an example, the stator voltage limit for a battery-powered PMSM can be formulated as,

$$U\_lim = m * \frac{U\_bat}{\sqrt{3}} * (1 - A).$$

Field weakening can be utilized to expand the operational range of electric motors in high speed operations. When you use the FOC algorithm to run an electric motor with rated flux, the maximum speed is limited by the stator voltages (as mentioned above), as well as rated current, and back emf (electromotive force). This speed limit is called the base speed. Beyond this speed, the operation of the machine is complex because the back emf is more than the supply voltage. However, by adjusting the d-axis stator current, the d-axis voltage (and the resulting d-axis flux) can be reduced, which allows the motor to run above the base speed. This operation is what's known as field-weakening control of the motor.

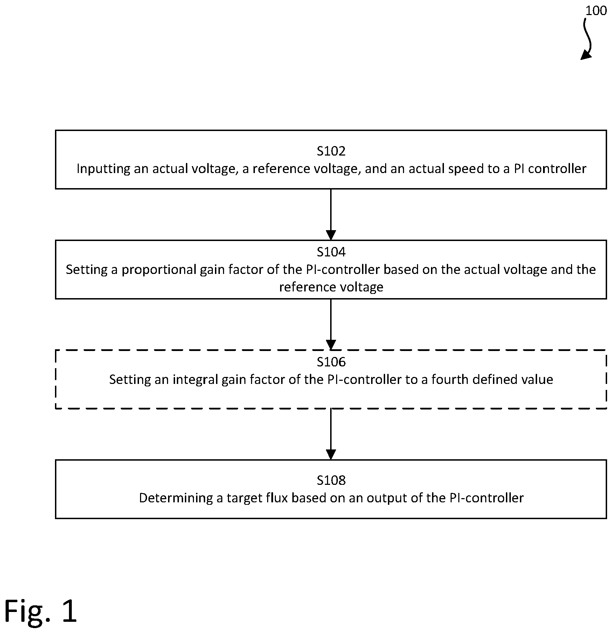

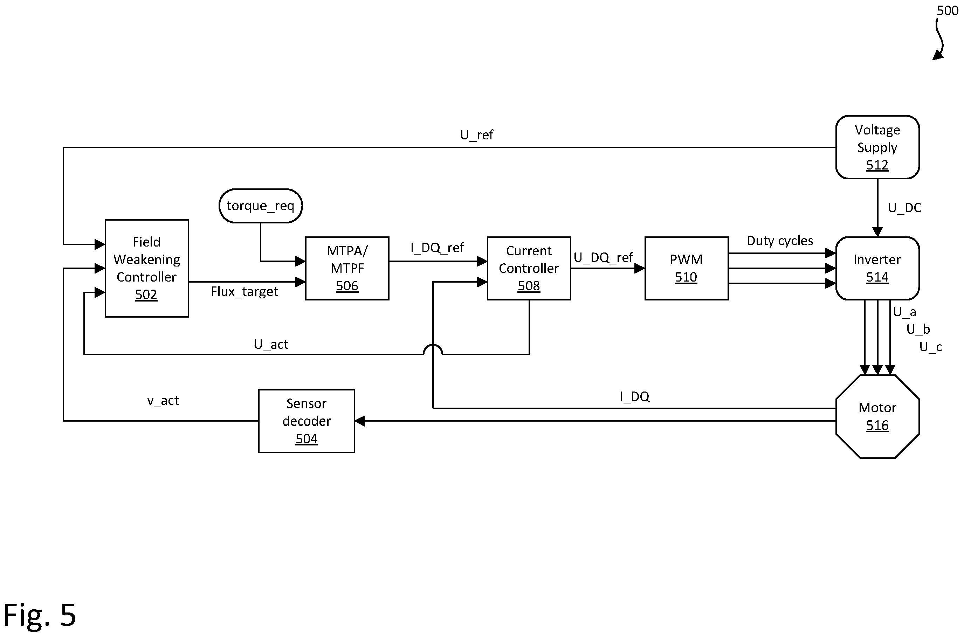

A method 100 for determining a target flux value for subsequent field weakening control of a permanent magnet synchronous motor, as well as a device 200 for performing the method, will now be described with reference to Fig. 1 to 4. The target flux value may be seen as a desired stator flux value for the motor. More specifically, in a motor control scheme, the target flux value may be fed as input to a block configured to determine reference DQ-axis currents for subsequent control of the motor. Fig. 5 shows, by way of example, a motor control scheme 500 in which the principles of the disclosed technology can be implemented. The rectangular blocks (i.e. blocks denoted 502 to 510) are used to illustrates parts of the control algorithm of the motor control scheme 500. The remaining blocks (blocks denoted 510 to 516) corresponds to the physical system of the motor control scheme.

The principles of the presently disclosed technology may be implemented in a field weakening controller 502. As shown in Fig. 5, the field weakening controller 502 takes as input an actual voltage ($U\_act$), a reference voltage ($U\_ref$), and an actual speed ($v\_act$). The actual voltage may be supplied from a current controller 508. More specifically, the actual voltage may be obtained as the hypotenuse of a reference DQ-axis voltage outputted from the current controller. The current controller 508 is configured to transform a reference DQ-axis current to the reference DQ-axis voltage. In other words, the current controller 508 determines desired values of the DQ-axis voltage (i.e. reference DQ-axis voltage, $U\_DQ\_ref$), based on desired values of the DQ-axis current (i.e. reference DQ-axis current, $I\_DQ\_ref$). More specifically, the current controller 508 determines the reference DQ-axis voltage based on an error between the reference DQ-axis current and an actual DQ-axis current ($I\_DQ$) obtained from the motor 516. The reference voltage depends on characteristics of a voltage supply 512 used to power the motor 516. The voltage supply 512 may for instance be a battery. The reference voltage may thus be supplied from the voltage supply 512. The actual speed may be obtained by sensor measurements (or other observers) of the motor 516. In the illustrated example, the actual speed is provided by a sensor decoder 504 (may also be referred to as a sensor demodulation). The field weakening controller 502 is configured to output a target flux value ($Flux\_target$). The target flux value may be used to achieve the intended field weakening effect. More specifically, the target flux value may be fed to a MTPA/MTPF block 506. MTPA standing for maximum torque per ampere, and MTPF for maximum torque per flux. The MTPA/MTPF block 506 may further receive a requested torque ($torque\_req$). The requested torque are to be seen as input signals to the motor control scheme for what the motor should produce in terms of torque. The MTPA/MTPF block 506 can then determine reference DQ-axis currents (i.e. desired values for the DQ-axis current) for achieving the target flux value and the requested torque. The motor control scheme 500 further comprise a pulse width modulation (PWM) block 510 configured to transform the reference DQ-axis voltage ($U\_DQ\_ref$) outputted from the current controller 508 to duty cycles for operating the inverter 514. The motor control scheme 500 further comprise an inverter 514 configured to transform the DC voltage (U_DC) supplied from the voltage supply 512 (i.e. the same voltage as the battery voltage, U_bat, referred to above) and the duty cycles into three-phase voltages (U_a, U_b and U_c) which are fed to stator windings of the motor 516.

The motor control scheme 500 of Fig. 5 is a simplified view for improved understanding. The motor control scheme 500 may comprise additional blocks and/or variants of the present blocks. Such variants depend on a specific realization. The present technology is therefore not limited to this example.

Figure 1 is a schematic flowchart representation of the method 100 for determining a target flux value for subsequent field weakening control of a permanent magnet synchronous motor (also referred to as just motor). The method 100 may be a computer implemented method. Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S104 and S106 may be performed in any order based on a specific realization. The same holds for the steps denoted S102 and S104 (and thus also S106). Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination.

The method 100 comprises inputting S102 an actual voltage, a reference voltage and an actual speed of the motor to a controller (also referred to as a regulator). The controller is configured to output data from which the target flux value can be determined. The outputted data may be determined by the controller based the actual voltage and actual speed fed to the controller. The controller may be part of a motor control scheme, or more specifically a field oriented control scheme, such as the motor control scheme illustrated in Fig. 5. More specifically, the controller may be the field weakening controller 502 as will be further explained below. The controller comprises a proportional term having a proportional gain factor, and an integral term having an integral gain factor. In other words, the controller may be a PI regulator. The wording "actual", as in "actual voltage" or "actual speed", should herein be understood as a measured or otherwise observed value of the motor. Thus, the actual voltage may be seen as a voltage value indicative of the actual stator voltages (i.e. voltage measured and/or calculated based on the actual stator voltage). More specifically, the actual voltage may be determined from an output of the current controller 508, i.e. from the reference DQ-axis voltage. The actual voltage may thus be seen as the voltage value that is fed to the motor. The actual speed may be seen as information indicative of a rotational speed of a rotor of the motor. More specifically, the actual speed may be derived or demodulated from sine and cosine resolver signals of the motor. In comparison, the wording "reference voltage" may be understood as a voltage value which the controller should strive towards in order to utilize as much of the available voltage as possible. In other words, the controller strives for the actual voltage to be as close to the reference voltage as possible.

In the implementation of the presently disclosed technology according to some embodiments, the reference voltage ($U\_ref$) may be set based on the stator voltage limit ($U\_lim$) of the motor, as described above. More specifically, the reference voltage may be set as any value lower than or equal to the stator voltage limit. To achieve as high voltage utilization level as possible (i.e. to maximize the actual voltage ($U\_act$)), the reference voltage should be set as close to the stator voltage limit as possible. However, to compensate for transients to keep the stability of the controller, it may be advantageous to have a safety margin between the reference voltage and the stator voltage limit. For example, the reference voltage may be defined as $U\_ref = 0.95 * U\_lim$. It goes without saying that the factor before $U\_lim$ can be selected based on need, and a specific realization.

The wording "voltage utilization level" (or just "voltage utilization") as used herein, should be understood as a measure of how much of the available voltage is actually utilized by the motor. It is therefore desirable to have as large voltage utilization level as possible.

More specifically, the voltage utilization level may be defined as a relation between the actual voltage and the stator voltage limit. I.e. how the actual voltage relates to the stator voltage limit. With the above terminology, the voltage utilization level ($VUL$) may then be formulated as $VUL = U\_act/U\_lim$. In such case, the voltage utilization level is a rate in a range between 0-100%. Alternatively, the voltage utilization level may be defined as a relation between the actual voltage and the reference voltage. With the above terminology, the voltage utilization level ($VUL$) may then be formulated as $VUL = U\_act/U\_ref$. In case the reference voltage is defined as 95% of the stator voltage limit, the voltage utilization level is a rate in a range between 0-100%/0.95.

It is to be noted that the inputs to the controller may be some data indicative of values of the actual voltage and actual speed of the motor.

The method 100 further comprises setting S104 the proportional gain factor of the controller based on the actual voltage and on the reference voltage. In other words, the proportional gain factor may be adjusted based on the actual voltage and the reference voltage. More specifically, the proportional gain factor may be set based on a voltage utilization level, as defined above. As will be further described below, the proportional gain factor may be set further based on the actual speed. The proposed technology disclosed herein, thus builds upon implementing the controller for determining the target flux value with a variable proportional gain factor. The proportional gain factor may vary depending on the actual voltage (and reference voltage) and/or on the actual speed. In particular, the proportional gain factor may be set (or adjusted) in view of a voltage utilization level.

Additionally, in some embodiments, also the integral gain factor may be set based on the actual speed. However, in the broadest sense, the integral gain factor may be set to a default and fixed value as is commonly known.

The method 100 further comprises determining S108 the target flux value based on an output from the controller. The output of the controller is obtained using the proportional gain factor set in the step denoted S104. Throughout the present disclosure, the wording controller refers to the field weakening controller 502 of the motor control scheme 500 illustrated in Fig. 5, unless otherwise stated.

It is to be appreciated that the value to which the proportional gain factor is set S104 may be determined as part of the controller, or. determined elsewhere, based on the input parameters described herein, and then fed to the controller. The same holds also for the value to which the integral gain factor may be set S106. The proportional gain factor and/or the integral gain factor may thus be set S104, S106 prior to, or after, inputting S102 the actual voltage, the reference voltage and the actual speed to the controller.

By the target flux value being determined "based on" the output from the controller it is herein meant that the controller may output any data from which the target flux value can be determined. In some embodiments, the controller outputs the target flux value. In other words, the data outputted from the controller may be the target flux value. Thus, the target flux value can be determined as the output of the controller directly. In other words, the controller can be configured to directly output the target flux value to be used for achieving the field weakening effect.

In some embodiments, the controller outputs a target flux adjustment value. In other words, the data outputted from the controller may comprise the target flux adjustment value. The target flux value may then be determined by applying the target flux adjustment value to a reference flux value. Put differently, a reference flux value may be obtained. The target flux value may then be determined as the reference flux value adjusted by the target flux adjustment value. For example, the reference flux value may be reduced by an amount corresponding to the target flux adjustment value.

The method 100 may further comprise providing the target flux value as input to the MTPA/MTPF block 506.

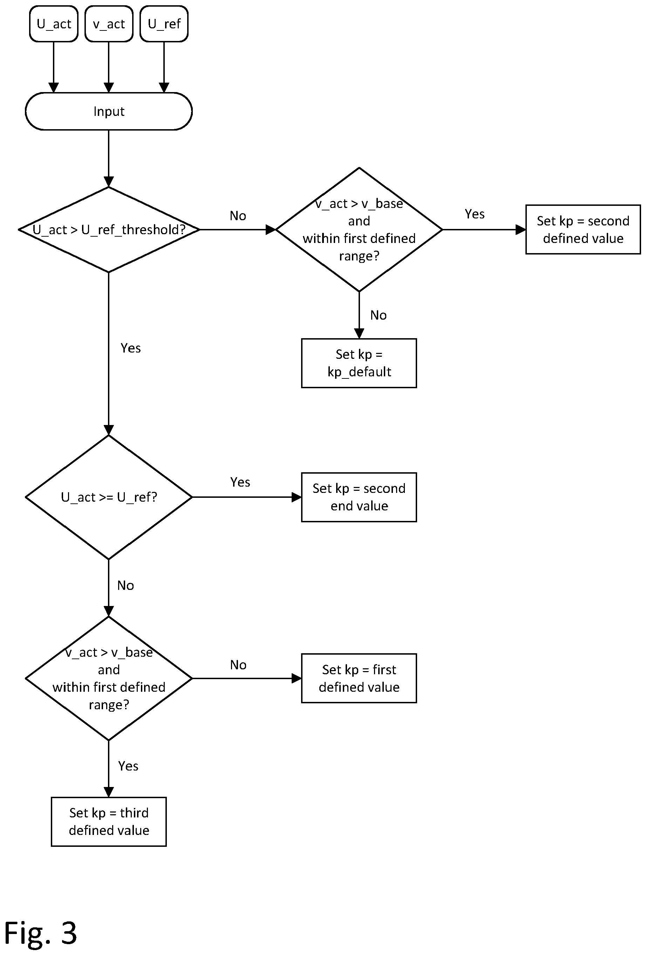

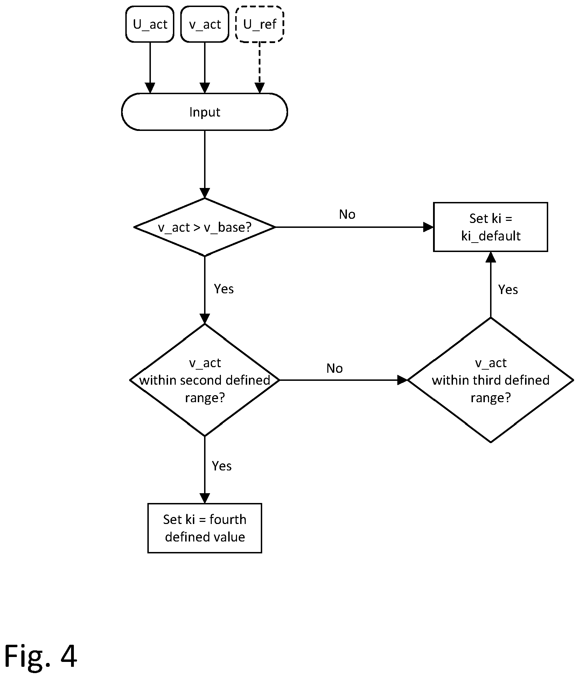

In the following, a more detailed description of how the proportional gain factor may be set, will be given. Additionally, it will be described how, in some embodiments, the integral gain factor may be set. These aspects are further exemplified in connection with Fig. 3 and Fig. 4 below.

In response to detecting the actual voltage exceeding a threshold value, the proportional gain factor may be set S104 to a first defined value different from a default value of the proportional gain factor. In other words, upon detecting that the actual voltage exceeding the threshold value, the proportional gain factor may be adjusted from the default value (or from any previous value). The threshold value is defined based on a reference voltage. The threshold value may for instance be defined as a certain proportion of the reference voltage. For example, the threshold value (U_ref threshold) may be defined as 95% of the reference voltage ($U\_ref$), i.e. $U\_ref\_threshold = 0.95 * U\_ref$. Thus, the threshold value may be defined such that it is exceeded when the actual voltage is getting close to the reference voltage. Thus, the adjustment of the proportional gain factor may be triggered for these values. It is to be appreciated that the threshold value may be different, depending on a specific realization.

The wording "the first defined value may be set S104 to/based on..." or similar, may be construed as "the step of setting S104 the proportional gain factor comprises setting the first define value to/based on..."

The default value of the proportional gain factor should herein be seen as the value used for the proportional gain factor in the case where the actual voltage does not exceed the threshold value.

The first defined value may be lower than the default value. In other words, the proportional gain factor may be reduced, compared to the default value of the proportional gain factor.

The first defined value may be set S104 based on a comparison between the actual voltage and the reference voltage. In other words, depending on how far (or close) the actual voltage is to the reference voltage, the proportional gain factor may be set accordingly. More specifically, the closer the actual voltage is to the reference voltage, the lower the proportional gain factor may be set. Put differently, this may be seen as setting the proportional gain factor based on the voltage utilization level. It is to be appreciated that depending on the specific implementation, the first defined value may as well be set based on a comparison between the actual voltage and the threshold value, as the threshold value in turn may be defined based on the reference voltage.

The first defined value may be set S104 according to a linear interpolation between a first and a second end value. In other words, the first defined value may be set to a value between (and including) the first and second end value. Moreover, the first defined value may be set according to the linear interpolation between the first and the second end value based on the comparison between the actual voltage and the reference voltage. The first defined value may be the first end value if the actual voltage is equal to the threshold value. The first defined value may be the second end value if the actual voltage is equal to the reference voltage. Thus, if the actual voltage is between the threshold value and the reference voltage, the first defined value may be a value between the first and second end value, based on said linear interpolation.

In response to detecting the actual voltage being equal to, or above the reference voltage, the proportional gain factor may be set to the second end value. Thus, for any values of the actual voltage above the reference voltage, the second end value may be used as the proportional gain factor.

In response to detecting the actual voltage being below the threshold value, the proportional gain factor may be set to the default value of the proportional gain factor.

In some embodiments, , the proportional gain factor may be set to a third defined value being lower than the first defined value, in response to detecting the actual speed being within a first defined range above a base speed threshold (and the actual voltage exceeding the threshold value). In other words, in case the actual voltage exceeds the threshold value, and the actual speed is within the first defined range, the proportional gain factor may be set to the third defined value. The third defined value is lower than the first defined value as mentioned above. The base speed threshold corresponds to the base speed referred to above. In other words, the base speed threshold is the limit at which the field weakening control is started. Thus, in the case described in this paragraph, the proportional gain factor may be reduced (compared to the default value) both in view of the actual voltage and in view of the actual speed.

According to some embodiments, the proportional gain factor may be set to a second defined value being lower than the default value, in response to detecting the actual speed being within a first defined range above a base speed threshold (and the actual voltage not exceeding the threshold value. In other words, in case the actual voltage is below the threshold value, and the actual speed is within the first defined range, the proportional gain factor is set to the second defined value. The second defined value may be larger than the third defined value. Thus, in the case described in this paragraph, the proportional gain factor may be reduced (compared to the default value) in view of the actual speed, but unchanged in view of the actual voltage.

As explained above, the integral gain factor of the controller may be set to a fixed default value. However, in some embodiments, the method 100 further comprises setting S106 the integral gain factor based on the actual speed. More specifically, the integral gain factor may be set to a fourth defined value different from a default value of the integral gain factor, in response to detecting the actual speed being within a second defined range above a base speed threshold. It is to be noted that the default value of the proportional gain factor and the default value of the integral gain factor are two separate values. They may have the same, or different values.

The fourth defined value may be higher than the default value of the integral gain factor. Thus, the integral gain factor may be increased (compared to the default value) in case the actual speed being within the second defined range above the base speed threshold. The second defined range may span from the base speed threshold to a maximum speed of the motor. Alternatively, the second defined range may span from the base speed to a lower end value of a third defined range (as will be mentioned below).

The fourth defined value may be set based on a comparison between the actual speed and the base speed. For example, the fourth defined value may be larger, the higher the actual speed is compared to the base speed threshold. It goes without saying that the fourth defined value may as well be set based on a comparison between the actual speed and the second defined range (or any of its end values).

The fourth defined value may be set according to a linear interpolation between a third and a fourth end value. In other words, the fourth defined value may be set to a value between (and including) the third and fourth end value. Moreover, the fourth defined value may be set according to the linear interpolation between the third and the fourth end value based on the comparison between the actual speed and the based speed threshold. The fourth defined value may be set to the third end value if the actual speed is equal to the base speed threshold (or to a lower end of the second defined range). The fourth defined value may be set to the fourth end value if the actual speed is equal to an upper end of the second defined range.

In response to detecting the actual speed being within a third defined range above the second defined range, the integral gain factor may be set to the default value of the integral gain factor. The third defined range is thus a higher speed range than the second defined range. The third defined range may be the same range as the first defined range mentioned above.

The following tables illustrates, by way of a non-limiting example, how the proportional gain factor and (optionally) how the integral gain factor can be set, based on the actual voltage ($U\_act$) and the actual speed ($v\_act$). More specifically, Table 1 shows how the proportional gain factor can be set based on the actual voltage. Table 2 shows how the proportional gain factor, and the integral gain factor can be set based on the actual speed.

Looking first at Table 1. In case the actual voltage ($U\_act$) is below the threshold value ($U\_ref\_threshold$), the default value ($kp\_default$) for the proportional gain factor may be used. In case the actual voltage is above the threshold value the proportional gain factor may be set as the first defined value. While the actual voltage is still below the reference voltage, the first defined value can be given according to a linear interpolation between a first and second end value. The first end value may for instance be given by 1 * $kp\_default$. In other words, the first end value may be the default value for the proportional gain factor. The second end value may be given by 0.25 * $kp\_default$. Thus, the linear interpolation may be formulated as $c1$ * $kp\_default$, where c1 goes from 1 to 0.25. In case the actual voltage is above the reference voltage, the proportional gain factor may be set to the second end value, i.e. 0.25 * $kp\_default$ in this example.

*Table 1*

| Condition | $U\_act < U\_ref\_threshold$ | $U\_ref\_threshold \leq U\_act \leq U\_ref$ | $U\_act > U\_ref$ |
|---|---|---|---|
| kp | *kp_default* | *First defined value* | *Second end value* |

Looking now at Table 2. In the present example, the first and the third defined range are the same defined range. However, the first and third defined range may be different ranges. The second defined range is a lower range than the first and third defined range. In other words, an upper end of the second defined range may be lower than, or equal to an lower end of the first/third defined range. As an illustrative example, the base speed threshold (*v_base*) may be 8kRPM. The speed herein refers to the rotational speed of the rotor of the motor. For actual speeds below this threshold, the field weakening controller may not be in use. In such case, the proportional gain factor and the integral gain factor may have their respective default values. In this example, the second defined range may be defined as the range from 8kRPM to 13kRPM. The first and third defined range may be 13kRPM to 17kRPM, in which 17kRPM corresponds to a maximum speed of the motor.

For actual speeds within the second defined range, the default value for the proportional gain factor may be used, as seen in Table 2. However, in case the proportional gain factor has been set to a value different from the default value as a result of the actual voltage, the proportional gain factor may be set to that value, as defined according to Table 1. In other words, *kp_default* in Table 2 may be replaced with any value determined according to Table 1.

In case the actual speed is within the first defined range, and the actual voltage is not above the threshold value, the proportional gain factor may be set to the second defined value. As described above, the second defined value may be lower than the default value for the proportional gain factor. The second defined value may thus be formulated as *c2 \* kp_default*, where *c2* is a value between 0 and 1. In one example, *c2* is equal to 0.25.

In case the actual speed is within the first defined range, and the actual voltage exceeds the threshold value, the proportional gain factor may be set to the third defined value. The third defined value may be lower than the first defined value. The third defined value may be formulated as *c3 \* first defined value*, where *c3* is a value between 0 and 1. In one example, *c3* is equal to 0.25. Thus, in case the proportional gain factor is set both based on the actual voltage and the actual speed, the proportional gain vector may be set as the third defined value being a combination of them both.

Regarding the integral gain factor, the default value for the integral gain factor (*ki_default*) may be used in case the actual speed is within the third defined range. In case the actual speed is within the second defined range, the integral gain factor may be set to the fourth defined value being different from the default integral gain factor. The fourth defined value may be set according to a linear interpolation between a third and a fourth end value. The third end value may be given by 1 \* *ki_default*. In other words, the third end value may be the default integral gain factor. The fourth end value may be given by 3.5 \* *ki_default*. Thus, the linear interpolation may be formulated as *c4 \* ki_default*, where *c4* goes from 1 to 3.5. It goes without saying that the numeric values used herein are only an illustrative example. Other values may be used depending on a specific realization.

*Table 2*

| Condition | $0 \leq v\_act \leq v\_base$ | v_act within 2nd defined range | v_act within 1st /3rd defined range |
|---|---|---|---|
| kp: ki: | kp_default ki_default | kp_default fourth defined value | second/third defined value ki_default |

As described in the forgoing, the method 100 involves setting the values for the proportional gain factor and/or the integral gain factor dynamically, based on the actual voltage, the reference voltage, and/or the actual speed of the motor. In other words, said values for the PI controller on which output the target flux value can be determined, can be adjusted continuously as the motor control is performed. This provides for an improved field weakening process, as it can reduce harmonics and increase stability of the controller. As seen in Fig. 5, the presently disclosed technology can be implemented in a closed loop system. The steps of the method 100 as described above may thus be seen as what is performed in one loop of the motor control scheme 500. The steps above may thus be repeated continuously, over a plurality of loops. In each loop, present values for the proportional gain factor (and optionally also the integral gain factor) may be obtained, together with present values for the actual voltage, reference voltage, and actual speed. In one example, the reference voltage may be a fixed value, specific to the motor and/or the power supply. In such case, the reference voltage may be set at a beginning of the iterative process.. However, due to variations in the DC voltage (e.g. due to harmonics or voltage drop), the reference voltage may vary as well. In such case, the reference voltage may be inputted every iteration. The step of setting S104 the proportional gain factor (and optionally also the step of setting S106 the integral gain factor) may then comprise determining updated value(s) for the proportional gain factor (and optionally the integral gain factor), by adjusting the present value(s) based on the input signals. The controller may then determine its output using said updated value(s). In the next loop, the steps may be repeated with said updated value(s) as the present values to be updated.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

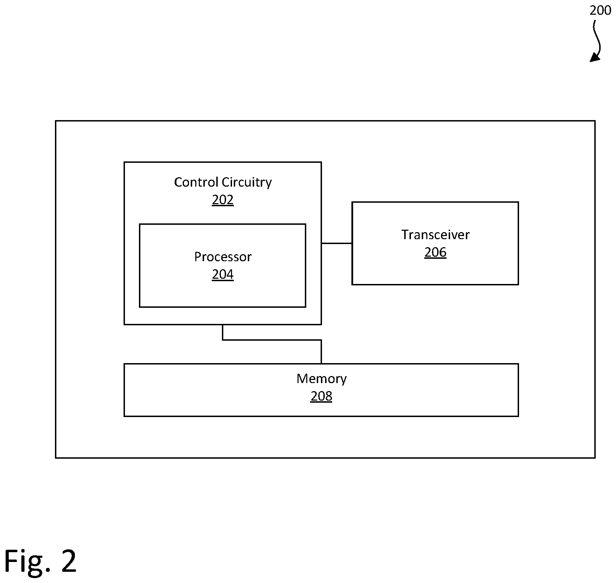

Figure 2 is a schematic illustration of a device 200 for determining a target flux value for subsequent field weakening control of a permanent magnet synchronous motor. In particular, the device 200 is configured to perform the techniques of the method 100 described in the foregoing with reference to Fig. 1. The device 200 may e.g. be provided locally in a vehicle (or any other machine or device) comprising the motor, such as a control system of the motor. However, as can be readily understood, the device 200 may be provided as an external device to the vehicle, such as a remote server or cloud implementation. In such case, the device 200 may be communicatively connected to the vehicle (or motor) either wirelessly or by wired connection.

The device 200 comprises control circuitry 202. The control circuitry 202 may physically comprise one single circuitry device. Alternatively, the control circuitry 202 may be distributed over several circuitry devices. As an example, the device 200 may share its control circuitry 202 with other parts of the vehicle (or machine), such as a control system of the vehicle. In another example, the device 200 may be a motor control system configured to perform the overall control of the motor.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 100 as described above in connection with Fig. 1. The steps may be implemented in one or more functions stored in the memory 208. It should be noted that the various function and operation of the device 200 may be implemented in additional functions than those described herein. In addition, one or more of the above functions may be implemented together in a common function.

The transceiver 206 may be configured to enable the device 200 to communicate with other devices. The transceiver 206 may both transmit data from and receive data to the device 200. For example, the device 200 may obtain/send data from/to the motor and resolver. Further, the device 200 may transmit data to other units or systems connected to the motor.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g. using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to input an actual voltage, a reference voltage, and an actual speed of the motor to a controller comprising a proportional term having a proportional gain factor, and an integral term having an integral gain factor.

The control circuitry 202 is further configured to set the proportional gain factor based on the actual voltage and the reference voltage. Optionally, the control circuitry 202 may be further configured to set the proportional gain factor based on the actual speed. Optionally, the control circuitry 202 may be further configured to set the integral gain factor based on the actual speed. More specifically, the integral gain factor may be set to a fourth defined value different from a default value of the integral gain factor, in response to detecting the actual speed being within a second defined range above a base speed threshold.

The control circuitry is further configured to determine the target flux value based on an output from the controller. The output form the controller is thus determined using the proportional gain factor (and/or the integral gain factor) set previously.

It should be noted that principles, features, aspects, and advantages of the method 100 as described above in connection with Fig. 1, are applicable also to the device 200 described herein. In order to avoid undue repetition, reference is made to the above.

Figure 3 is a schematic flowchart representation of how the proportional gain factor can be set according to some embodiments. More specifically, Fig. 3 illustrates, by way of example and for improved understanding, the logics behind how the proportional gain factor may be set based on the actual voltage and/or the actual speed of the motor.

The actual voltage (denoted $U\_act$), the reference voltage (denoted $U\_ref$) and the actual speed (denoted $v\_act$) are provided as input.

In Fig. 3, the threshold value is denoted $U\_ref\_threshold$. The base speed threshold is denoted $v\_base$. The default value for the proportional gain factor is denoted $kp\_default$.

First, it may be checked whether the actual voltage is above the threshold value. If not, it may be checked whether the actual speed is above the base speed, and within the first defined range. If yes, the proportional gain factor may be set to the second defined value, as described above. If no, the proportional gain factor may be set to the default value for the proportional gain factor.

If instead the actual voltage is above the threshold value, it may be checked whether the actual voltage is also above the reference voltage. If yes, the proportional gain factor may be set to the second end value (reference made to the above). If no, it may be checked whether the actual speed is above the base speed, and within the first defined range. If not, the proportional gain factor may be set to the first defined value. If yes, the proportional gain factor may be set to the third defined value.

Figure 4 is a schematic flowchart representation of how an integral gain factor may be set according to some embodiments. More specifically, Fig. 4 illustrates, by way of example and for improved understanding, the logics behind how the integral gain factor may be set based on the actual voltage and/or the actual speed of the motor.

The actual voltage (denoted $U\_act$) and the actual speed (denoted $v\_act$) are provided as input. The reference voltage (denoted $U\_ref$) may also be provided as input.

In Fig. 4, the base speed threshold is denoted $v\_base$. The default value for the integral gain factor is denoted $ki\_default$.

First, it may be checked whether the actual speed is above the base speed. If not, the integral gain factor may be set to the default value for the integral gain factor. If yes, it may be checked whether the actual speed is within the second defined range. If yes, the integral gain factor may be set to the fourth defined value. If not, it may be checked whether the actual speed is within the third defined range, and if yes, the integral gain factor may be set to the default value of the integral gain factor.

Both logics of Fig. 3 and Fig. 4 may be implemented as part of the present inventive concept at the same time independently of each other. In some embodiments, only the proportional gain factor is set to a value based on the input signals, prior to determining the target flux value. In some embodiments, only the integral gain factor is set to a value based on the input signals, prior to determining the target flux value.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

**Claims**

1. A method (100) for determining a target flux value for subsequent field weakening control of a permanent magnet synchronous motor, the method (100) comprising:

   inputting (S102) an actual voltage, a reference voltage and an actual speed of the motor to a controller comprising a proportional term having a proportional gain factor, and an integral term having an integral gain factor; setting (S104) the proportional gain factor based on the actual voltage and the reference voltage; and determining (S108) the target flux value based on an output from the controller.

2. The method (100) according to claim 1, wherein the proportional gain factor is set (S104) based on a voltage utilization level.

3. The method (100) according to claim 1 or 2, wherein the proportional gain factor is set (S104) to a first defined value different from a default value of the proportional gain factor, in response to detecting the actual voltage exceeding a threshold value based on the reference voltage.

4. The method (100) according to claim 3, wherein the first defined value is lower than the default value.

5. The method (100) according to claim 3 or 4, wherein the first defined value is set based on a comparison between the actual voltage and the reference voltage.

6. The method (100) according to any one of the claims 3 to 5, wherein the first defined value is set according to a linear interpolation between a first and a second end value.

7. The method (100) according to claim 6, wherein, in response to detecting the actual voltage being equal to, or above the reference voltage, the proportional gain factor is set (S104) to the second end value.

8. The method (100) according to any one of the claims 3 to 7, wherein, in response to detecting the actual voltage being below the threshold value, the proportional gain factor is set (S104) to the default value of the proportional gain factor.

9. The method (100) according to any one of the claims 3 to 8, wherein, in response to detecting the actual speed being within a first defined range above a base speed threshold and the actual voltage not exceeding the threshold value based on the reference voltage, the proportional gain factor is set (S104) to a second defined value being lower than the default value.

10. The method (100) according to any one of the claims 3 to 9, wherein, in response to detecting the actual speed being within a first defined range above a base speed threshold and the actual voltage exceeding the threshold value based on the reference voltage, the proportional gain factor is set (S104) to a third defined value being lower than the first defined value.

11. The method (100) according to any one of the claims 1 to 10, further comprising, in response to detecting the actual speed being within a second defined range above a base speed threshold, setting (S106) the integral gain factor to a fourth defined value different from a default value of the integral gain factor.

12. The method (100) according to claim 10, wherein, in response to detecting the actual speed being within a third defined range above the second defined range, the integral gain factor is set (S104) to the default value of the integral gain factor.

13. The method (100) according to claim 10 or 11, wherein the fourth defined value is higher than the default value of the integral gain factor.

14. A control device for determining a target flux value for subsequent field weakening control of a permanent magnet synchronous motor, the control device comprising control circuitry configured to perform the method according to any one of the claims 1 to 13.

15. A computer program product comprising instructions which, when the program is executed by a computing device, causes the computing device to carry out the method according to any one of the claims 1 to 13.

100

```
┌─────────────────────────────────────────────────────────────────────┐
│                              S102                                     │
│   Inputting an actual voltage, a reference voltage, and an actual     │
│                     speed to a PI controller                          │
└─────────────────────────────────────────────────────────────────────┘
                                  │
                                  ▼
┌─────────────────────────────────────────────────────────────────────┐
│                              S104                                     │
│ Setting a proportional gain factor of the PI-controller based on the │
│            actual voltage and the reference voltage                   │
└─────────────────────────────────────────────────────────────────────┘
                                  │
                                  ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                              S106                                     │
│   Setting an integral gain factor of the PI-controller to a fourth   │
│                          defined value                                │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                  │
                                  ▼
┌─────────────────────────────────────────────────────────────────────┐
│                              S108                                     │
│    Determining a target flux based on an output of the PI-controller  │
└─────────────────────────────────────────────────────────────────────┘
```

# Fig. 1

200

Control Circuitry
202

Processor
204

Transceiver
206

Memory
208

Fig. 2

U_act    v_act    U_ref

Input

U_act > U_ref_threshold? — No → v_act > v_base and within first defined range? — Yes → Set kp = second defined value

v_act > v_base and within first defined range? — No → Set kp = kp_default

U_act > U_ref_threshold? — Yes ↓

U_act >= U_ref? — Yes → Set kp = second end value

U_act >= U_ref? — No ↓

v_act > v_base and within first defined range? — No → Set kp = first defined value

v_act > v_base and within first defined range? — Yes → Set kp = third defined value

# Fig. 3

Fig. 4

Fig. 5

## EUROPEAN SEARCH REPORT

Application Number

EP 23 21 1740

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/211079 A1 (JIAN LONG FEI [CN] ET AL) 8 July 2021 (2021-07-08) | 1,3,5,7, 8,14,15 | INV. H02P23/14 |
| Y | * paragraphs [0001], [0073] – [0074], [0081] – [0082], [0137]; figure 3B * ----- | 11,13 | H02P23/00 |
| Y | US 2013/261896 A1 (GEBREGERGIS ABRAHAM [US] ET AL) 3 October 2013 (2013-10-03) * paragraph [0015]; figures 1,2 * ----- | 11,13 | |
| A | DE 10 2022 101074 A1 (EBM PAPST MULFINGEN GMBH & CO KG [DE]) 20 July 2023 (2023-07-20) * paragraph [0023] – paragraph [0029] * ----- | 1-15 | |

TECHNICAL FIELDS SEARCHED (IPC)

H02P

The present search report has been drawn up for all claims

| Place of search | Date of completion of the search | Examiner |
|---|---|---|
| Munich | 29 April 2024 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1740

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | Publication date | Patent family member(s) | | Publication date |
|---|---|---|---|---|
| US 2021211079 A1 | 08-07-2021 | CN | 113162506 A | 23-07-2021 |
| | | EP | 3849073 A1 | 14-07-2021 |
| | | US | 2021211079 A1 | 08-07-2021 |
| | | US | 2022337183 A1 | 20-10-2022 |
| US 2013261896 A1 | 03-10-2013 | CN | 103358932 A | 23-10-2013 |
| | | EP | 2644437 A2 | 02-10-2013 |
| | | US | 2013261896 A1 | 03-10-2013 |
| DE 102022101074 A1 | 20-07-2023 | NONE | | |

EPO FORM P0459

For more details about this annex : see Official Journal of the European Patent Office, No. 12/82